(19) **Europäisches Patentamt**
**European Patent Office**
**Office européen des brevets**

(11) **EP 4 629 559 A1**

(12) **EUROPEAN PATENT APPLICATION**

(43) Date of publication:
08.10.2025 Bulletin 2025/41

(51) International Patent Classification (IPC):
**H04L 9/30** $^{(2006.01)}$

(21) Application number: 24168637.7

(22) Date of filing: 05.04.2024

(52) Cooperative Patent Classification (CPC):
**H04L 9/3093;** G06F 7/588

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Aktiengesellschaft**
**80333 München (DE)**

(72) Inventors:
• **Aghaie, Anita**
**81379 Munich (DE)**
• **Aschauer, Hans**
**81829 München (DE)**
• **Böffgen, Pascale**
**81247 München (DE)**
• **Che, Kai**
**80636 München (DE)**
• **De Santis, Fabrizio**
**80634 München (DE)**
• **Safieh, Malek**
**81539 München (DE)**
• **Vaira, Antonio**
**81379 München (DE)**
• **Zeschg, Thomas**
**81543 München (DE)**
• **Zwanzger, Johannes**
**85579 Neubiberg (DE)**

(74) Representative: **Siemens Patent Attorneys**
**Postfach 22 16 34**
**80506 München (DE)**

(54) **METHOD AND COMPUTING DEVICE FOR OBTAINING A CRYPTOGRAPHIC KEY PAIR**

(57) The invention relates to a computer-implemented method for obtaining a cryptographic key pair (8,9) for use in a cryptographic method, the method comprising: randomly generating (S1) a private key (5, 8) of the cryptographic key pair (8,9); operating (S2) a hardware-implemented structure (4) using a randomly generated challenge (6) to obtain, in particular directly, a noise vector (7) from the hardware-implemented structure (4); and calculating (S3) a public key (9) of the cryptographic key pair (8,9) from the generated random private key (5, 8) using the noise vector (7) obtained from the hardware-implemented structure (4).

The method advantageously offers a low-overhead, lightweight and hardened way of obtaining noise vectors 7 for use in calculating a public key of a PQ-secure cryptographic keypair.

Also contemplated is a corresponding computing device and computer program product.

**FIG 3**

**Description**

The present invention relates to the field of post-quantum secure cryptography, and, in particular, to a method and a computing device for obtaining a cryptographic key pair.

Post-quantum secure (PQ-secure) cryptography refers to performing cryptographic operations, such as cryptographic data transmissions or cryptographic data storage using conventional computing devices in such a manner that the cryptographic data transmission or the cryptographically stored data cannot be, or is difficult to be, compromised in the future also by an intruder that has access to quantum computing resources. For example, widely used and known public-private cryptographic keypair schemes such as the RSA, Diffie-Hellman or elliptic-curve cryptosystems could, theoretically, be defeated using Shor's algorithm on a quantum computer and therefore cannot be considered to be PQ-secure.

On the other hand, PQ cryptography is based on computational problems that cannot be solved efficiently by both classical and quantum computers. For example, certain lattice-based cryptographic methods may be considered to be PQ-secure under the assumption that certain well-studied computational lattice problems cannot be solved efficiently and are resistant to attack by both classical and quantum computers.

For example, in lattice-based cryptography, the security of the cryptographic algorithm is based on the computational hardness of certain problems related to these lattices. One of the most important lattice-based computational problems is the shortest vector problem (SVP), which asks us to approximate the minimal Euclidean length of a non-zero lattice vector. The Learning With Errors (LWE) problem, which is equivalent in difficulty with lattice problems such as the SVP problem, was introduced by Oded Regev in 2005 [1], and a survey is given in [2] (see literature list at the end of the present specification). LWE is a well-known problem in lattice-based cryptography and has been adopted as part of the NIST standardization effort of PQ cryptography. The security of LWE-based cryptographic schemes is based on the hardness of solving the LWE problem, which involves finding a secret vector given a set of near-linear equations that are each slightly perturbed by a small error (noise).

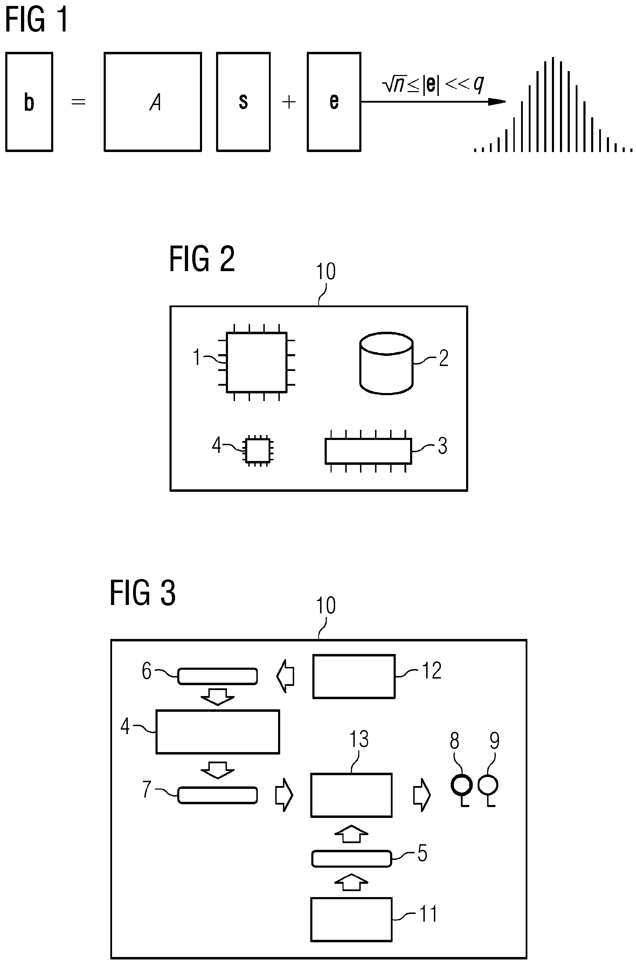

The LWE problem is briefly visualized in Fig. 1. Specifically, the LWE problem involves recovering a secret vector $\mathbf{s} \in \mathbb{Z}_q^n$ given a sequence of "approximate" random linear equations that are defined by the parameters $A$, $\mathbf{b}$ and $q$. Herein, $\mathbb{Z}_q^n$ is the $n$-dimensional space of integer numbers modulo subscript $q$, wherein $q$ is a predefined prime number. Herein, "modulo subscript $q$" means that numbers drawn from $\mathbb{Z}_q$ are within the range [$-q$+1, ..., $q$-1], and that any additions or multiplications within said space are also followed up with a modulo $q$ operation. $A$ is a $n$ x $m$ matrix and $\mathbf{b}$ is an $n$-dimensional vector, each of $A$ and $\mathbf{b}$ comprising entries drawn from $\mathbb{Z}_q^1$, and e is an $n$-dimensional noise vector the entries of which are drawn from the $\chi$ distribution and that should fulfil the condition that $\sqrt{n} \leq |\mathbf{e}| \ll q$.

It is noted that when the noise term $\mathbf{e}$ is ignored (when e is zero), the set of all solutions to the equation $\mathbf{b}=A\cdot\mathbf{s}$ (+ 0) that is visualized in Fig. 1 forms a lattice. Each point in this lattice corresponds to a possible value of the secret vector $\mathbf{s}$. As long as $\mathbf{e}$ is zero, the secret vector $\mathbf{s}$ can be recovered given $A$ and $\mathbf{b}$ in polynomial time using Gaussian elimination.

In LWE, then, with $\mathbf{e}$ being non-zero, the challenge in the LWE problem is to find the correct lattice point, given that the observed values are slightly perturbed by the noise term $\mathbf{e}$. So, in the LWE problem, the lattice is implicitly defined by the system of near-linear equations.

It has been found that small noise error $\mathbf{e}$ drawn from the $\chi$ distribution makes this problem difficult to solve and allows for construction of a hard cryptographic method that is PQ-safe.

Briefly, one example of a PQ-safe, lattice-based, public-private key cryptographic application can be construed as follows: The cryptographic application is parametrized by integers $n$ (security parameter, dimensionality of the noise vector and the secret vector), $m$ (number of equations), $q$ (modulus) and a noise parameter $\alpha$ (wherein $\alpha q$ is the standard deviation of the $\chi$ distribution). One safe parameter choice is choosing $q$ to be a prime number between $n^2$ and $2n^2$, and m = 1.1 $n \log q$, and $\alpha = \left(\sqrt{n} \log^2 n\right)^{-1}$. Then, bearing in mind that all additions are performed modulo $q$: Vector s is chosen uniformly from $\mathbb{Z}_q^n$ and is used as a private key. Matrix $A$ is chosen to comprise n row vectors $\mathbf{a}_i$ of length m drawn uniformly from $\mathbb{Z}_q^m$, and $\mathbf{e}$ is chosen by drawing its entries from the $\chi$ distribution parametrized by standard deviation $\alpha q$. $\mathbf{b}$ with entries $b_i$ is calculated to be $\mathbf{b} = A \cdot \mathbf{s} + \mathbf{e}$. Then, the pair of matrix $A$ and vector $b$ can serve as a public key that is safe against an intruder having access to a quantum computer trying to recover secret vector $\mathbf{s}$ from the public key. Encryption can then be performed, by doing, for each bit of a message, the following: Choose a random set S uniformly among all $2^m$

subsets of [m]. The encryption is $(\Sigma_{i \in S}\, \mathbf{a}_i, \Sigma_{i \in S}\, b_i)$ if the bit is 0 and ( $\sum_{i \in S} \mathbf{a}_i, \left\lfloor \frac{q}{2} \right\rfloor + \sum_{i \in S} b_i,$ ) if the bit is 1. The decryption of a pair $(\mathbf{a}, b)$ is 0 if is $b - \langle \mathbf{a}|\mathbf{s} \rangle$ is closer to 0 than to $\left\lfloor \frac{q}{2} \right\rfloor$ mod $q$, and 1 otherwise, where <> denotes the inner product. For a proof of the PQ-safety of this cryptographic application, reference is made to [2].

Following the extension of LWE to rings by Lyubashevsky et al. in 2010 [3], LWE and its variants have become popular choices for building postquantum cryptographic primitives. In 2015, the first concrete implementation with specific parameters was proposed, followed by the subsequent development of the Ring-LWE scheme New Hope and its standard LWE counterpart Frodo. In more details, the core of the three LWE-based key encapsulation mechanisms (KEMs), namely NewHope, Frodo, and Kyber, is the Lyubashevsky-Peikert-Regev (LPR) public-key encryption scheme, which is based on the difficulty of the RingLWE, standard LWE and Module-LWE problem respectively [4, 5, 6].

In the aforementioned PQ-secure cryptographic methods, the way in which the noise vector e is generated plays a significant role for the hardness of the computational problem, such as the LWE problem, and therefore for the PQ-security of the cryptographic methods.

The initiation of the NIST post-quantum standardization process resulted in a significant increase in the number of encryption schemes built upon LWE. The various submissions varied in their choice of LWE variant, parameters, and supplementary techniques, such as error generation/sampling/correction. As shown in Fig. 1 in the mathematical equation $\mathbf{b}=A \cdot \mathbf{s} + e$, PQC algorithms that rely on (variants of) LWE require noise (error) generation and then sampling from these noise distributions, which can be generated using calls to a pseudorandom function [6].

NewHope [5] samples from a centered binomial distribution, which is straightforward and does not require high precision computations or large lookup tables, as one may sample from distribution $\Psi_k$ by computing $\sum_{i=0}^{k} b_i - b_i'$ , wherein $b_i, b_i' \in \{0,1\}$ are uniform independent bits [5]. There exist various implementation approaches in both hardware and software platforms which generate this proposed centered binominal distribution for Ring-LWE-based PQ-secure cryptographic algorithms.

Many existing LWE implementations employ noise sampling from a discrete Gaussian distribution, which has proven to be either inefficient or susceptible to timing attacks [4]. The Gaussian sampler used to generate secret parameters is computationally expensive and vulnerable to side-channel attacks in both hardware and software platforms. This inefficiency stems from the assumption that high-quality Gaussian noise generation is critical for LWE-based encryption, leading to slower and more complex implementations in some cases [5, 6].

As one of the practical examples in hardware implementation of the problem of sampling a noise vector **e,** for LWE-based encryption, an implementation on FPGA Xilinx families [7], a reconfigurable hardware-based platform, was considered. A random number generator was applied. More precisely, the applied random number generator (RNG) for noise generation is a round based AES in counter mode that computes a 128-bit AES block in 13 cycles and comprises 349 slices, 1181/ 350 LUT/FF, two 18K block RAMs and runs with a maximum frequency of about 265 MHz based on a Virtex-6 LX75T FPGA implementation. Then, the mentioned RNG is combined with a PRNG and Gaussian sampling based on the inverse transform method.

Another solution is the software implementation of the noise generation for LWE-based algorithms which can be observed in the case of NewHope [5]. It was implemented on ARM Cortex, a software-based platform. In this implementation, the authors utilized a centered binomial distribution $\Psi_k$, which was used as both the secret (**s**) and noise/error (**e**) in the LWE. The parameter k was set to 16, resulting in a mean of 0 and a variance of 8, yielding a standard deviation of $\sigma = \sqrt{8}$. To ensure secure random number generation, the ChaCha20 stream cipher was used to expand a 32-byte seed or, alternatively on the Cortex-M4 platform, the built-in hardware random number generator. It is worth noting that the Cortex-M0 does not have a hardware RNG, whereas the Cortex-M4 platform on the STM32F4xx-series development board does have a 32-bit hardware RNG that has passed all statistical tests for secure random number generation provided by the NIST. The authors present two versions for the required noise generation on the M4 platform, one using the ChaCha20 and one utilizing the hardware RNG [5, 8].

In summary, current solutions may employ a hardware-based entropy source, but require additional algorithmic steps like use of a pseudo random number generator and a noise generation or Gaussian sampling algorithm to arrive at a noise vector **e** having the required distribution for LWE. These additional algorithmic steps may be inefficient and/or susceptible to various attacks.

It is noted that LWE and lattice-based cryptographic methods have been described as one particularly salient example of a case where a noise vector **e** drawn from a non-uniform distribution, such as the $\chi$ distribution, is required to generate a PQ-secure public key. As the field of PQ-secure cryptography evolves, it is already envisioned that other cryptographic methods will be developed that can equally benefit from a noise vector drawn from a non-uniform distribution.

It is one object of the present invention to improve the creation of PQ-secure public keys for use in a cryptographic method.

Accordingly, under a first aspect, there is proposed a computer-implemented method for obtaining a cryptographic key pair for use in a cryptographic method, the proposed method comprising: a) randomly generating a private key of the cryptographic key pair; b) operating a hardware-implemented structure, using a randomly generated challenge, to obtain a noise vector from the hardware-implemented structure; and c) calculating a public key of the cryptographic key pair from the generated random private key using the noise vector obtained from the hardware-implemented structure.

In particular, the noise vector is obtained directly from the hardware-implemented structure in step b).

The inventors have found that obtaining, in particular directly, a noise vector from a hardware-implemented structure is a viable way of obtaining a noise vector having sufficient entropy that can be used to add a disturbance to the calculation of a public key of a cryptographic key pair so as to make the public key of the cryptographic key pair PQ-secure.

In particular, since the noise vector is obtained from the hardware-implemented structure, the public key calculated using the noise vector may advantageously be robust against both timing and software-based attacks.

Furthermore, since the noise vector is provided by a hardware-implemented structure, the generation of the noise vector is efficient and avoids computing-intensive calculation such as Gaussian sampling and the like.

That is, advantageously, the creation of a PQ-secure public key for use in a cryptographic method is improved in terms of security and efficiency.

In particular, the proposed method may offer a low-overhead, lightweight and hardened way of obtaining noise vectors for use in calculating a public key of a PQ-secure cryptographic keypair.

In particular, the noise vector obtained from the hardware-implemented structure is drawn from a non-uniform distribution.

That is, more particularly, the hardware structure may be configured to provide the noise vector such that when step b) is repeated N times, a plurality of N obtained noise vectors follows a non-uniform distribution, and in particular a narrow non-uniform distribution.

The inventors have found that there is a wide class of hardware-implemented structures from which noise can be obtained that is drawn from a non-uniform distribution and that such noise can be used in PQ-secure cryptographic methods to obtain PQ-secure public keys.

In this connection, it is noted that "to obtain, in particular directly" is to be construed to be limiting in the sense that at least the shape of a distribution followed by a plurality of noise vectors obtained when repeating step b) N times remains unaltered during any potential post-processing that may be applied to the noise vector before using it in the calculation of step c). That is, more particularly, any such potential post-processing may comprise simple steps of converting a signal output by the hardware structure into a vector, in particular into a data structure such as an array or sequence of one-bit or multi-bit scalar values, that is suitable for use in the calculation of step c). On the other hand, any such potential post-processing shall exclude any computing-intensive sampling steps that would alter the distribution from which the noise vector is drawn.

In particular, the method may comprise repeating at least steps b) and c) N times, with N>=1, to obtain a number of N noise vectors and a number of N public keys.

Then, advantageously even an attacker having access to quantum computing resources and having obtained all N public key may not be able to infer the private key from the N public keys.

The details of how the public key is calculated in step c) depend on the PQ-secure cryptographic method being used and can be obtained from literature describing the specific PQ-secure cryptographic method.

The challenge may be a challenge vector, such as a random sequence of bits or a random sequence of numbers, or may be a scalar value, or may be any other type of data or control signal, depending on specific implementation details of the hardware-implemented structure.

The term vector, in so far as it relates to the noise vector, the challenge vector, or the private key vector to be discussed later, may be understood as an array or a sequence of one-bit or multibit values, such as, for example, as a sequence or arrays of scalar vectors drawn from $\mathbb{Z}_q$ .

In particular, the cryptographic key pair is PQ-secure.

In particular, the cryptographic method is PQ-secure.

According to an embodiment, the method further comprises performing storing and/or transmitting of cryptographically encrypted data and/or of cryptographically signed data, wherein encrypting data to obtain the cryptographically encrypted data and/or verifying the cryptographically signed data is performed according to the cryptographic method and using the public key of the cryptographic key pair.

That is, it is envisioned that the public key calculated by the proposed method is used for secure cryptographic data communication and/or secure cryptographic data storage and has the advantageous technical effect of improving the PQ-security of the cryptographically transmitted and/or stored data in an efficient manner.

According to a further embodiment, a uniformity metric of a plurality of noise vectors obtained from the hardware-based structure including the noise vector obtain in step b) follows a non-uniform distribution.

That is, more particularly, the hardware structure may be configured to provide the noise vector such that when step b) is repeated N times, and the uniformity metric is calculated for a plurality of N noise vectors obtained in this way, the uniformity metric follows a non-uniform distribution, and in particular a narrow non-uniform distribution.

The uniformity metric may be a measure of the uniformity of a n-bit response obtained from the PUF structure, and its distribution may be defined by a probability mass function.

According to a further embodiment, the non-uniform distribution is one of a Gaussian distribution, a centered binominal distribution, and a $\chi$ distribution.

That is, in particular, the hardware-implemented structure may advantageously be designed such that it is able to supply noise vectors that follow (that are drawn from) a centered binominal distribution, which is a suitable error distribution for direct application in lattice-based cryptographic methods for public key calculations, such as for example in the Kyber [4] implementation.

According to a further embodiment, the cryptographic method is a lattice-based cryptographic method.

In particular, calculating the public key may be performed using any of the techniques described in the introductory section of the present specification hereinabove or in various literatures in connection with lattice-based cryptographic methods, such as adding the noise vector **e** to a result of multiplying a randomly and uniformly chosen matrix $A$ with the private key (secret vector **s**) to obtain a further vector **b** and using the further vector **b** and the matrix $A$ as the public key.

In a lattice-based cryptographic method, a noise vector drawn from a non-uniform distribution advantageously ensures PQ-security of the calculated public key, and obtaining the noise vector from a hardware-implemented structure advantageously safeguards the public key against timing and software-based attacks.

According to a further embodiment, the lattice-based cryptographic method is a method based on, or derived from, a Learning With Error, LWE, problem.

The LWE problem, as described in the introductory portion of the present specification, is one particular example of a cryptographic problem that can be used in a lattice-based cryptographic method and that benefits from the noise vector that is obtained from the PUF structure according to the proposed method.

In particular, a method "based on or derived from a LWE problem" may include, but is not limited to, for example, Ring LWE (RLWE) or Module LWE (MLWE).

According to a further embodiment, the randomly generated private key comprises a private key vector; and the public key is calculated by: randomly generating a matrix comprising a number of independent rows; multiplying the generated matrix with the private key vector; and adding the noise vector obtained from the hardware-implemented structure to the result of said multiplying to obtain a further vector; and forming the public key comprising the matrix and the further vector.

Herein, the randomly generated matrix may be identified with matrix **A,** the private key vector may be identified with vector s, and the further vector may be identified with vector **b** in the above-described brief description of the LWE problem.

That is, each of the randomly generated matrix, the private key vector, and the further vector may comprise an array (in the case of the matrix) or a sequence (in the case of the private key vector and the further vector) of scalar values drawn from $\mathbb{Z}_q$ .

The noise vector may comprise an array or a sequence of scalar values drawn from $\mathbb{Z}_q$ , or may be a vector of scalar values drawn from $\mathbb{Z}_{q'}$ , with $1 \leq q' \leq q$.

Obtaining the noise vector drawn from $\mathbb{Z}_{q'}$ from the hardware-implemented structure may, for example, comprise obtaining, from the hardware-implemented structure, a signal indicative of a sequence of one-bit "zero" or "one" values, and grouping each consecutive number of one or more one-bit values into a multi-bit value to obtain a sequence of (multi-bit) scalar values.

According to a further embodiment, entries of the respective randomly generated entity follow a uniform distribution.

That is, the entries of the randomly generated entity, such as the randomly generated matrix, the randomly generated private key, the randomly generated private key vector and/or the randomly generated challenge, are drawn at random and uniformly from a space such as $\mathbb{Z}_q$ , or the like.

Any known method of generating uniformly distributed random numbers may be used.

According to a further embodiment, the step of randomly generating the entries of the respective randomly generated entity comprises seeding a random number generator and obtaining the entries from the seeded random number generator.

The random number generator may be a hardware-based random number generator or a software-based pseudo-random generator.

According to a further embodiment, entropy for seeding the random number generator is obtained from a physical process and/or the random number generator generates random numbers from a physical process.

Herein, a physical process may be used that generates uniformly distributed entropy. Alternatively, if the physical process used does not generate uniformly distributed entropy, error correction and shaping algorithms may be applied to the output of the physical process. Merely as one example, also the hardware-implemented structure of the proposed method could be used as an entropy source for seeding the random number generator, with post-processing such as error correction and the like that reshapes the output to be in a uniform distribution.

According to a further embodiment, the hardware-implemented structure comprises a physical unclonable function, PUF, structure.

A physical unclonable function, in particular, is a hardware-implemented one-way function that is configured to produce a unique and random output in response to being supplied with a challenge as an input. Herein "random" refers to the fact that the response cannot be predicted from the challenge input other than by pure chance. "Unique" refers to the fact that due to the effect of random process variations during fabrication, states of nominally identically fabricated physical unclonable functions differ from one another in a random and unpredictable fashion, so that each specific fabricated instance of a physical unclonable function supplies a unique output for a given challenge supplied as input.

The inventors have found that the physical characteristics of the PUF structure can provide a sufficient source of entropy and uniqueness of the PUF structure output, making it a viable option for generating, directly in hardware, random outputs from a predetermined distribution, from which the noise vector can be formed that is required for calculating public keys according to lattice-based problems such as LWE, without requiring any insecure and/or inefficient shaping or sampling transformations.

Furthermore, a PUF structure may advantageously be implemented in a more area-efficient way in hardware than any of the above-cited existing hardware-based noise generation technologies, and may require a less complex architectural design in terms of the number of slices and flipflops utilized in a FPGA implementation, for example.

That is, advantageously, no (potentially insecure and/or inefficient) algorithmic postprocessing of the output of the PUF structure for re-shaping the distribution from which the noise vector is drawn is required. The PUF structure directly outputs, from hardware, a signal from which a noise vector that is drawn from the desired distribution can be formed without reshaping. This noise vector can be used directly in the calculation that obtains the public key.

According to a further embodiment, the PUF structure comprises a ring oscillator PUF or an arbiter PUF.

A ring oscillator PUF is a PUF in which a pair of ring oscillator frequencies $f_a$ and $f_b$, with $a \neq b$, are quantized and compared to produce a response bit. The ring oscillator implemented in [9] may be used as a basis of the PUF structure for the proposed method.

An arbiter PUF is a PUF that consists of n consecutive stages that carry two paths, wherein each stage is supplied with one bit from a challenge vector (the challenge) that determines whether the corresponding stage flips the paths or not. The paths are supplied with a rising signal and a response bit is generated depending on which of the paths propagated the signal faster. The arbiter PUF implemented in [10] may be used as a basis of the PUF structure for the proposed method.

It is noted when using a ring oscillator PUFs or an arbiter PUFs to generate a conventional, non-PQ-safe, private key, a required property is that the PUF output be uniform so that the private key cannot be guessed by an intruder. While the output of a ring oscillator PUF and/or an arbiter PUF should be uniform in the ideal case, this is not the case in real-world implementations. Therefore, conventionally, the output of such PUFs has been supplied to algorithmic error correction and uniformity shaping post-processing steps to become useful for classic private key generation. One contribution of the inventors lies in realizing that real-world PUF-structures based on RO PUFs or arbiter PUFs show a narrow non-uniformity that is actually useful for directly obtaining noise vectors that can be directly applied in the calculation of public keys in a lattice-based cryptographic method based on LWE or similar problems, and applying such PUF structures accordingly.

According to a further embodiment, the PUF structure comprises a ring oscillator PUF comprising a plurality $2N$ of ring oscillators, the ring oscillator PUF being configured to output the noise vector comprising a plurality $N$ of bits when operated according to an exclusive pairwise quantization scheme.

Operation according to an exclusive pairwise quantization scheme advantageously enables obtaining a total number of $N$ truly independent bits from a ring oscillator PUF comprising 2N ring oscillators. For example, the quantization scheme disclosed in [11] may be employed. In this way, advantageously, a $N$ bit noise vector can be obtained directly from a ring oscillator PUF. Herein, in particular, $N \geq n$ and/or $N = n \cdot \log_2 q'$, that is, when a noise vector comprising n scalar values each drawn from $\mathbb{Z}_{q'}$ is required, the N single-bit values obtained from the ring oscillator PUFs may be grouped into n multi-bit scalar values each comprising $\log_2 q'$ bits such that each of the multi-bit scalar values is within $\mathbb{Z}_{q'}$ .

According to a further embodiment, the PUF structure comprises a plurality of arbiter PUFs, and a same challenge vector is used as the challenge with each of the arbiter PUFs to obtain a respective element of the noise vector.

In this way, a multi-bit response comprising independent bits can be elicited from an arbiter PUF-based PUF structure.

According to a further embodiment, the hardware-implemented structure is implemented as an array on an FPGA or on an ASIC.

Hardware-based implementation as an FPGA or ASIC advantageously hardens the noise vector generation.

Moreover, when the hardware-implemented structure is the PUF structure, the proposed PUF structure design may be area-efficient and have a low complexity when implemented in FPGA or ASIC.

In particular, a FPGA implementation of the PUF structure may comprise an array of Look Up Tables (LUT) without requiring a BRAM or other costly parts.

Any embodiment of the first aspect may be combined with any embodiment of the first aspect to obtain another embodiment of the first aspect.

According to a second aspect, the invention relates to a computer program product comprising a program code for executing the above-described method for obtaining a PQ-secure cryptographic key pair when run on at least one computing device that comprises or is communicatively connected with the hardware-implemented structure.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a third aspect, a computing device for obtaining a cryptographic key pair for use in a cryptographic method is proposed. The computing device comprises: a hardware-implemented structure; and a) a first unit configured to randomly generate a private key of the PQ-secure cryptographic key pair; b) a second unit configured to operate the hardware-implemented structure using a randomly generated challenge to obtain a noise vector from the hardware-implemented structure; and c) a third unit configured to calculate a public key of the cryptographic key pair from the generated random private key using the noise vector obtained from the hardware-implemented structure.

The respective unit may be implemented in hardware and/or in software. If said unit is implemented in hardware, it may be embodied as a device, e.g. as a computer or as a processor or as a part of a system, e.g. a computer system. If said unit is implemented in software it may be embodied as a computer program product, as a function, as a routine, as a program code or as an executable object.

The embodiments and features described with reference to the method of the first aspect apply mutatis mutandis to the computer program product of the second aspect and/or to the computing device of the third aspect.

Independent of the grammatical term usage of terms such as "intruder" and the like, individuals with male, female or other gender identities are included within the term.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:

Fig. 1 illustrates the LWE problem.

Fig. 2 shows a structural view of a keypair generation device according to a first exemplary embodiment;

Fig. 3 shows a functional view of the keypair generation device according to the first exemplary embodiment;

Fig. 4 shows method stops of a keypair generation method according to the first exemplary embodiment;

Fig. 5 shows a cryptographic communication system according to a second exemplary embodiment;

Fig. 6 shows a schematic diagram of a ring-oscillator PUF used in a third exemplary embodiment;

Fig. 7 shows visualized and measured probability mass functions for an *N*-bit ring oscillator PUF structure of a further development of the third exemplary embodiment;

Fig. 8 shows a schematic diagram of an arbiter PUF used in a fourth exemplary embodiment;

Fig. 9 shows a schematic diagram of an N-bit arbiter PUF structure according to the fourth exemplary embodiment; and

Fig. 10 shows visualized and measured probability mass functions for an N-bit ring oscillator PUF structure of a further development of the fourth exemplary embodiment.

In the Figures, like reference numerals designate like or functionally equivalent elements, unless otherwise indicated.

Fig. 1 illustrates the LWE problem: Given vector **b** of dimensionality $n$ and matrix $A$ of dimensionality $n \times m,$ find the secure vector **s.** All of vectors **b, s** and matrix $A$ are populated with elements drawn from $\mathbb{Z}_q$ . This problem is made hard to solve for both classical and quantum vectors by introducing error vector **e** drawn from a Gaussian, binominal or the $\chi$ distribution that is visualized on the right hand in the figure. Noise vector **e** is a small noise or perturbation that fulfils the condition $\sqrt{n} \leq |\mathbf{e}| \ll q$ . Noise vector **e** is added to the result of multiplying matrix $A$ with secret vector **s** when calculating **b.** This problem has been discussed in more detail in the introductory section of the present specification and this discussion will not be repeated here. Suffice it to say that the LWE problem is one of a class of problems that can be used to construe a lattice-based PQ-secure cryptographic public/private key-based method using **s** as the private key and the combination of $A$ and **b** as the public key. Herein, hardness of the method crucially depends on the hardness of the method with which the noise vector **e** is obtained, in particular, on its entropy or randomness, non-reproducibility, non-uniformness and the like.

Fig. 2 shows a structural view of a keypair generation device 10 according to a first exemplary embodiment. The keypair generation device 10 is an example of a computing device for obtaining a cryptographic key pair that is, in particular, PQ-secure. The keypair generation device 10 comprises standard computing components, such as, but not limited to, a CPU 1, a mass storage 2 and a random access memory 3. Additionally, the keypair generation device 10 comprises a hardware-implemented structure 4. In some developments, the hardware-implemented structure may, for example, be implemented as an ASIC or as an FPGA device. Details of the hardware-implemented structure 4 will be given later.

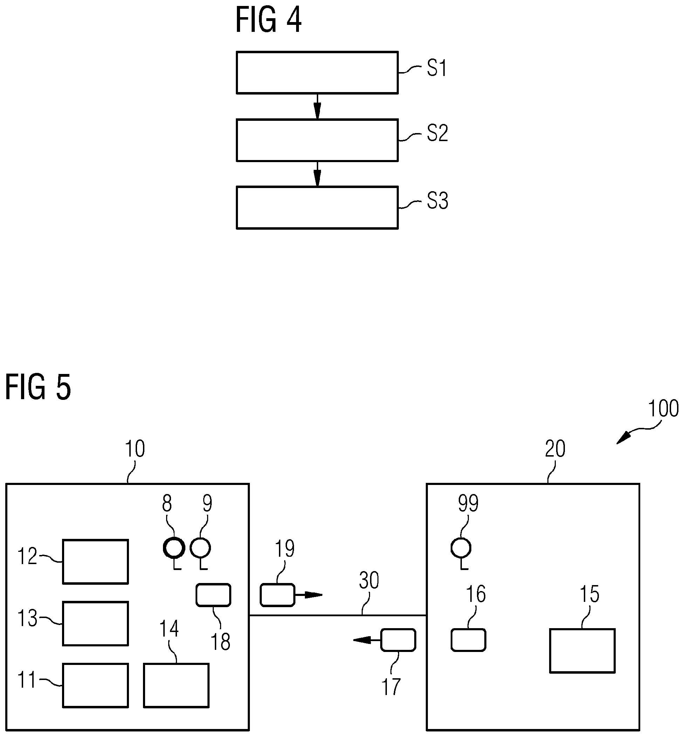

A computer program product may be stored on the mass storage 2 and may be loaded from the mass storage device 2 into the random access memory 3. When the CPU 1 executes the computer program product loaded into random access memory 3, the keypair generation device 10 forms the functional units 11-13 shown in Fig. 3 and executes the method shown in Fig. 4.

Fig. 3 shows a functional view of the keypair generation device 10 according to the first exemplary embodiment. It is noted that in the functional view of Fig. 3, rectangles with pointed corners denote functional units, while rectangles with rounded corners and other shapes, such as the key shape, indicate data. Fig. 4 shows method steps of a keypair generation method according to the first exemplary embodiment. Reference will be made to Figs. 2, 3 and 4.

The keypair generation method shown in Fig. 4 is an example of a method for obtaining a cryptographic key pair for use in a cryptographic method. In particular, the cryptographic key pair and the cryptographic method may be PQ-secure.

In step S1 of the method, the first unit 11 randomly generates a private key 5 and supplies the private key 5 to the third unit 13. The method of how the private key 5 is generated is not particularly restricted and any known method for private key 5 generation may be used.

In step S2, the second unit 12 randomly generates a challenge 6. The method of generating the challenge 6 is also not particularly restricted. The challenge 6 may be generated in a way that is similar to the generation of the private key 5. With certain hardware-implemented structures 4 (such as the arbiter PUF of the fourth exemplary embodiment described hereinbelow), the challenge 6 may be a challenge vector 6 comprising a sequence of uniformly-distributed random bit values.

Still in step S2, the second unit 12 inputs the randomly generated challenge 6, or a signal generated based on the randomly generated challenge 6, into the hardware-implemented structure 4 and operates the hardware-implemented structure 4 so as to obtain, in response to inputting the challenge 6, a noise vector 7 from the hardware-implemented structure 4. Details of operation of the hardware-implemented structure 4 will be described later. However, in generality, it can be said that it has been found that noise vectors 7 obtained from a wide class of hardware-implemented structures 4 are not uniformly distributed, but follow a narrow non-uniform distribution, which makes such noise vectors 7 suitable for use in various types of PQ-secure cryptographic methods, and in particular for lattice-based cryptographic methods. The second unit 12 then supplies the obtained noise vector 7 to the third unit 13.

In step S3, the third unit 13 calculates, based on the noise vector 7 and the private key 5, a public key 9 of the PQ-secure cryptographic key pair. The specifics of how the public key 9 is calculated from the private key 5 and the noise vector 7 depend on the specifics of the cryptographic method that is chosen. For the specific example of a lattice-based cryptographic method, reference is made to the descriptions given in relation to Fig. 1 and in the introductory portion of the present specification. Furthermore, the private key 5 calculated by the first unit 11 is used as the private key 9 of the cryptographic key pair. In this way, the cryptographic key pair comprising private key 8 and public key 9 is obtained.

The cryptographic key pair 8, 9 can be considered to be PQ-secure and hardened by virtue of the calculation performed in step S3 according to the cryptographic method and by virtue of the noise vector 7 that was used for this calculation having been obtained directly from the hardware-implemented structure 4.

According to one particular preferable further development, the cryptographic method is a lattice-based method, and is, more preferably, based on and/or derived from the Learning With Error, LWE problem that is illustrated in Fig 1. Reference is made to Fig. 3 and Fig. 1. In this case, the cryptographic method is parametrized, inter alia, by integers $n$ (size of the private key 5) and $m$ (number of linear equations). The private key 5, then, is a vector (secret vector, private key vector), i.e., secret vector $s$ of Fig. 1, and the noise vector 7 output by the hardware-implemented structure 4 in step S2 is the noise vector $e$ of Fig. 1. According to the present preferable further development, the calculation of the public key 9 from the private key 5, 8 (secret vector $s$) and the noise vector 7 (noise vector $e$) in step S3 is as follows: Matrix $A$, which comprises $m$ rows each comprising $n$ scalar values is generated uniformly and at random, i.e, the individual scalar values are drawn randomly from a uniform distribution such that the rows of matrix A are independent from each other. Matrix $A$ is then multiplied with private key 5 (secret vector $s$), and noise vector 7 (noise vector $e$) is added to the result of the multiplication, as shown in Fig. 1. The result of said multiplication is further vector $b$. The public key is then formed in step S3 such that it comprises the matrix $A$ and the further vector $b$. Thanks to the noise vector 7 (noise vector $e$) obtained from the hardware-implemented structure 4 being involved in the computation of the public key 9, even for an intruder having access to a quantum computer with Shor's algorithm or the like, it will be hard to impossible to guess $s$ when given the public key 9, i.e. vector $b$ and matrix $A$. It may therefore be safe to distribute the public key 9 to the public, and to use the cryptographic key pair comprising public key 9 and private key 8 for performing cryptographic operations, such as encrypted data transmission, encrypted storage, cryptographically signing data, and cryptographic authentication, even in a post-quantum world.

Fig. 5 shows a cryptographic communication system 100 according to a second exemplary embodiment. The cryptographic communication system 100 comprises a communication device 10 and a communication partner device 20. The communication device 10 and the communication partner device 20 are connected by a wired or wireless network link 30.

The second exemplary embodiment is based on the first exemplary embodiment in the sense that the communication device 10 of the cryptographic communication system 100 comprises all structural and functional features of the keypair generation device 10 of the first exemplary embodiment and/or its preferred further development, which will not be described again in detail. Shown are the first unit 11, the second unit 12, the third unit 13 and the PQ-secure cryptographic key pair 8,9, which have the same functions and meaning as the corresponding elements of the first exemplary embodiment and its preferred further development. The following description focusses on the additional features of the second exemplary embodiment.

That is, each of the communication device 10 and the communication partner device 20 comprise a respective communication unit 14, 15 that is configured to transmit and receive data over the network link 30.

After having generated the PQ-secure cryptographic key pair 8, 9, the communication device 10 distributes the public key 9 (more accurately: a copy 99 of the public key 9) to the communication partner device 20.

When the communication partner device 20 wishes to transmit a data element 16 to the communication device 10, the communication unit 15 of the communication partner device 20 uses the public key 99 to encrypt the data element 16 so as to obtain an encrypted data element 17, and transmits the encrypted data element 17 over the network link to the communication device 10. The communication unit 14 of the communication device 10 uses the private key 8 to decrypt the received encrypted data element 17 so as to obtain a decrypted copy of data element 16.

When the communication device 10 wishes to digitally sign a data element 18 (which may be real payload data, or may be a nonce received over network link 30 from communication partner device 20 as part of an authentication scheme, for example), the communication unit 14 of the communication device 10 uses the private key 8 to cryptographically sign the data element 18 so as to obtain the cryptographically signed data element 19, and transmits the cryptographically signed data element 19 over the network link 30 to the communication partner device 20. The communication unit 15 of the communication partner device 20 uses the copy of the public key 99 to verify the digital signature of the cryptographically signed data element 19 and may take an action, such as allowing or denying access, considering or discarding the data element 19, or the like, dependent on an outcome of the verification.

It is also conceivable that the communication device 10 wishes to store some data element, such as data element 18, locally (such as in mass storage 2, Fig. 2) in encrypted manner. In this case, the communication device 10 may use the public key 9 to encrypt data element 18 and may optionally also use the private key 9 to sign the encrypted data element 18, and may store the cryptographically encrypted and (optionally) signed data element 18 in mass storage 2 (Fig. 2). Thus, even if mass storage 2 (Fig. 2) is removed and stolen by an intruder, the intruder will not be able to decrypt the data.

It is noted that the cryptographic key pair 8, 9 may optionally be stored in a secure element, such as a TPM, fTPM or the like, (not shown) of the communication device 10.

It is noted again that in the first exemplary embodiment and in the preferred further development, as well as in the second exemplary embodiment, the entries of the challenge 6 (bit values or scalar values or the like) and the entries of the private key vector 5 (scalar integer values) as well as, if applicable, the entries of matrix $A$ (scalar integer values) are generated randomly and follow (or are drawn from) a uniform distribution. In classic as well as traditional PQ-secure cryptographic key generation, uniform distribution is desired to prevent various forms of attacks based on trying to predict the sequence of random numbers and the like. Merely as some examples, a pseudo-random number generator or a hardware-based random number generator may be used to generate these entries. Preferably, the random number generator is seeded with entropy obtained from some physical process by, for example, seeding the random number generator with the current system time modulo some prime number, or with a seed obtained from an optional, non-shown, hardware-based entropy source. It is also conceivable that a hardware random number generator draws entropy directly from some physical process, such as radioactive decay, or the like. Any known method for obtaining uniformly distributed random numbers may be used.

In contrast thereto, the noise vector 7 (vector e in Fig. 1) in the LWE problem and other lattice-based approaches is required to be drawn not form a uniform distribution, but from a narrow non-uniform distribution, such as, for example, a Gaussian, binominal or the $\chi$ distribution. Traditional approaches of obtaining the noise vector 7, even when employing hardware-based solutions, required additional algorithmic steps, such as software-based Gaussian sampling, which are inefficient and/or susceptible to attacks. In contrast thereto, the exemplary embodiments propose to obtain the noise vector from a hardware-implemented structure 4 because it has been found that a wide class of hardware-implemented structures 4 can directly supply noise vectors 7 with the required distribution.

Certain particularly useful hardware-implemented structures 4 will now be described in more detail. That is, according to embodiments of the present invention, the hardware-implemented structure 4 is a physically unclonable function, PUF, structure 4. Two particular useful PUF-based designs will now be described in detail.

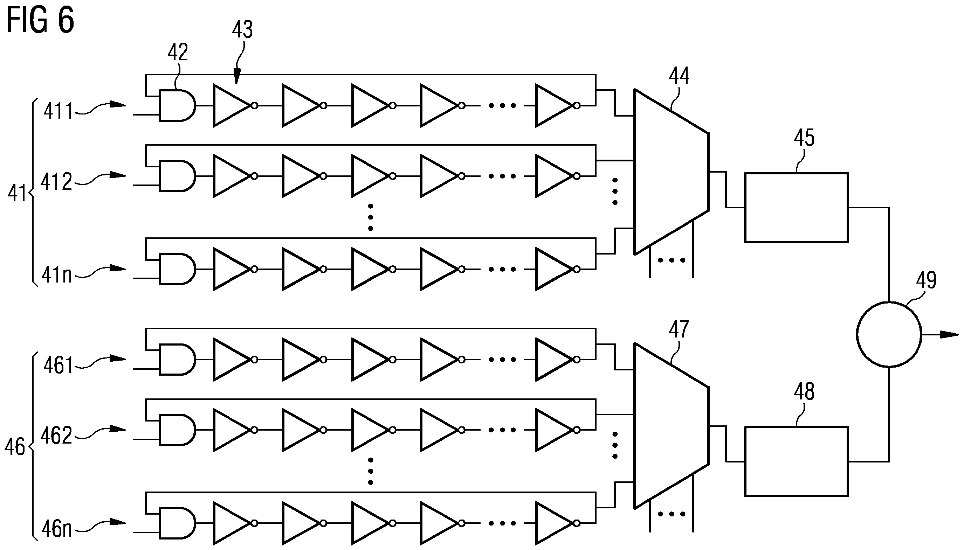

Fig. 6 shows a schematic diagram of a ring-oscillator PUF 40. A third exemplary embodiment will now be described. The third exemplary embodiment is based on the first or second exemplary embodiment or one of their further developments, and differs therefrom in that the hardware-implemented structure 4 (Fig. 3) is a PUF structure 4 that comprises at least one ring oscillator PUF 40. Reference will now be made to Fig. 6 and Fig. 3.

The ring-oscillator PUF 40 comprises a plurality of ring oscillators 411 ... 46n. In the present example, the ring oscillators 411 ... 46n are subdivided into a first ring oscillator subgroup 41 comprising ring oscillators 411, 412, ..., 41n, and a second ring oscillator subgroup 46 comprising ring oscillators 461, 462, ..., 46n. Each of the ring oscillators 411 ... 46n comprises a two input NAND gate 42 at its input end and a series of delaying inverting stages 43. When the two input NAND gate 42 of each of the ring oscillators 411 ... 46n is supplied with an enable signal, each of the ring oscillators 411 ... 46n starts oscillating. Herein, due to random process variations during fabrication, each of the ring oscillators 411 ... 46n will oscillate with a slightly different oscillation frequency.

The ring oscillator PUF 40 further comprises a first multiplexer 44 and a first counter 45. The first multiplexer 44 has an input side that is connected to an output side of each of the ring oscillators 411 ... 41n of the first ring oscillator subgroup 41. Based on a first challenge supplied to the first multiplexer 44 as a control signal, the first multiplexer 43 selects one of the ring oscillators 411 .. 41n of the first ring oscillator subgroup 41. The selected ring oscillator 411 .. 41n is coupled through to the output side of the first multiplexer 43. An input side of the first counter 45 is connected to the output side of the first multiplexer 44. The first counter 45 thus counts oscillations of the selected ring oscillator 411 ... 41n, and supplies the count at its output side.

Likewise, the ring oscillator PUF 40 further comprises a second multiplexer 47 and a second counter 48. The second multiplexer 47 has an input side that is connected to an output side of each of the ring oscillators 461 ... 46n of the second ring oscillator subgroup 46. Based on a second challenge supplied to the second multiplexer 47 as a control signal, the second multiplexer 47 selects one of the ring oscillators 461 .. 46n of the second ring oscillator subgroup 46. The selected ring oscillator 461 .. 46n is coupled through to the output side of the second multiplexer 47. An input side of the second counter 48 is connected to the output side of the second multiplexer 47. The second counter 48 thus counts oscillations of the selected ring oscillator 461 ... 46n.

The ring oscillator PUF 40 also comprises a comparator 49, an input side of which is connected to the output side of both counters 45, 58 and that generates, on its output side, bit "1" or bit "0" depending on which of the first counter 45 and the second counter 48 signals a higher count.

In this way, by supplying a corresponding challenge to the MUXes 44 and 47, an unpredictable and unique random bit is obtained at the output side of counter 49. Herein, the respective challenge may be, for example, an encoded scalar value that defines which of the ring oscillators 411 ... 411n, 461 ..461n is to be selected.

Several techniques exist for obtaining a multi-bit noise vector from the ring oscillator PUF 40.

For example, the exclusive pairwise quantization scheme disclosed in [11] can be used in order to identify true unique and independent pairs each comprising one ring oscillators 411 ... 41n from the first ring oscillator subgroup 41 and one ring oscillator 461 ...46n from the other ring oscillator subgroup 46. The challenge 6 generated by the second unit 12 could be used to seed a random number generator that then produces a sequence of random numbers from which an order is determined in which the ring oscillator pairs identified by the exclusive pairwise quantization scheme are to be selected, and corresponding challenges for the MUXes 44 to 47 can then be generated one by one to obtain the bits of the noise vector 7 (Fig. 3) one by one from the comparator 49.

As another example, a PUF structure 4 (Fig. 3) could comprise a plurality of the ring oscillator PUFs 40, and each of the ring oscillator PUFs 40 is used to obtain a single bit of the noise vector 7 (Fig. 3). In this case, the same challenge 6 (Fig. 3) could be directly applied to each of the ring oscillator PUFs 40 without having to use a quantization scheme or a random number generator to generate further challenges from the challenge 6.

A practical exemplary and non-limiting hardware implementation of the PUF structure 4 of a preferred further development of the second exemplary embodiment may comprise hardware implemented ring oscillators 411 ... 416n arranged in a 16x32 array, located in the center of a FPGA fabric. Each ring oscillator 411 ... 416n consists of five inverting stages 42, 43 that are implemented using Look Up Tables (LUTs). One of these inverting stages is a 2-input NANDgate 42, with one of the inputs serving as an enable signal for the ring oscillator oscillation. The implementation of each single complete ring oscillator 411 ... 46n loop is contained within a Configurable Logic Block (CLB) to ensure local routing among the inverting stages 42, 43. This design allows for efficient and localized noise generation through the ring oscillators 411 ... 416n in the hardware implementation.

Accordingly, a n-bit ring oscillator physical unclonable function 40 can be utilized to generate the noise vector 7. Specifically, for applications such as Kyber [4], which require a binomial distribution for noise generation, e.g., a 256-bit RO PUF with 512 ring oscillators 411 ... 416n can be used to provide the necessary 256 random bits of the noise vector 7 for a given Kyber implementation size of 32*8.

In order to evaluate the security of the proposed hardware-implemented structures 4 in the various exemplary embodiments and their preferred further developments, a uniformity metric may be used.

That is, a dependent variable $X_U$ is a measure of the uniformity of an $N$-bit response from a hardware-implemented structure like 4, such as from a PUF structure having a PUF component 40. The uniformity metric $X_u$ is calculated as the fraction of non-zero response bits ($k$, where $k$ is an integer between 0 and $N$ inclusive). The distribution of the uniformity metric is determined by the probability mass function $p\left(X_U = \frac{k}{N}\right)$ as follows:

$$p\left(X_U = \frac{k}{N}\right) = \sum_{R \in \{0,1\}^N}^{n} P(X = R) \cdot \delta_{(X_{\text{HW}(R)}, k)}$$

Herein, $P(X = R)$ represents the probability that a PUF structure 4 outputs a specific response $R$ (noise vector 7). $\delta$ denotes the Kronecker delta, HW($R$) denotes the Hamming weight (number of non-zero bits) of the response R. The sum is carried out over all 2N possible responses R. The delta function may be understood as an indicator function, which equals 1 when the Haming weight of response $R$ ($X_{\text{HW}(R)}$) is equal to $k$, and 0 otherwise. This is a way to ensure that only the responses with a Hamming weight of $k$ contribute to the probability being calculated.

Another approach to calculate an uniformity metric is as follows: Let $P(R=1)$ denote the single-bit probability of bit $i$ being 1, and $P(R=0)$ denote the single-bit probability of bit $i$ being zero, with $P(R=1) = 1 - P(R=0)$, for $i = 1..N$. It is noted $R$ denotes the output of PUF that depends on physical characteristics, for example the difference of oscillation frequencies in the above-described case of a ring oscillator PUF 40, or the difference in delay lines in the arbiter PUF that will be described later. Such difference in physical characteristics results in an output bit being either 0 or 1. Now, under the condition that the bits are independent variables, the uniformity metric is Poisson binomially distributed as

$$p\left(X_U = \frac{k}{N}\right) = \sum_{A \in B_k}^{n} \prod_{i \in A} P(R = 1) \cdot \prod_{j \in A^C} \left(1 - P(R = 0)\right)$$

Herein, $B_k$ is defined as the set of subsets containing $k$ integer indices taken from {1, 2, ..., N}, and $A^C$ denotes the complement of set A.

Now, the uniformity metric of an $N$-bit ring oscillator PUF structure 4 is calculated based on the above-cited equation for independent variable uniformity. For example, the implementation of a ring oscillator PUF 40 was carried out on a total of 193 instances on an FPGA platform. Specifically, the exclusive pairwise quantization scheme was utilized to produce 256 response bits for each of these PUF 40 instances.

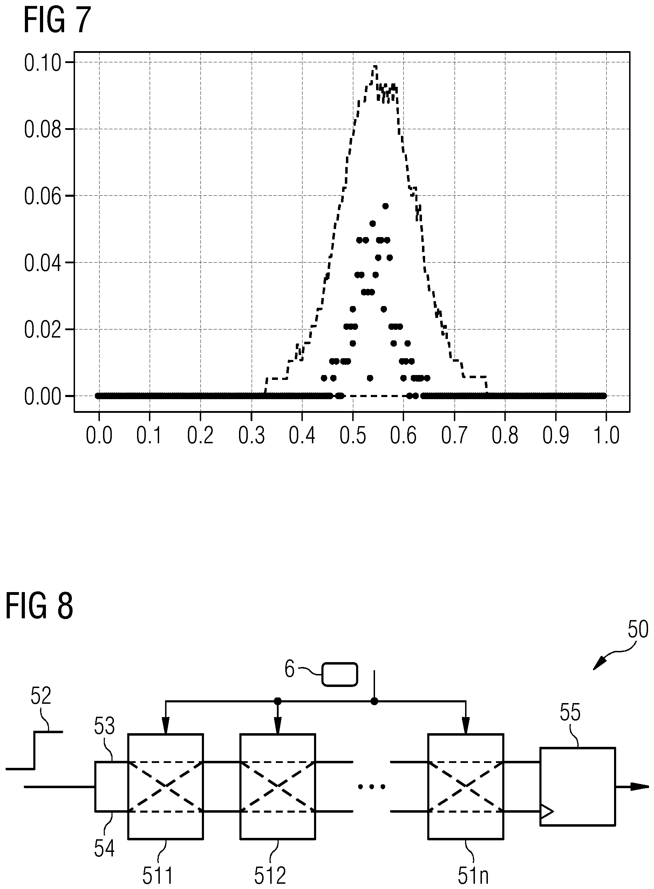

Fig. 7 shows visualized and measured probability mass functions for an N-bit ring oscillator PUF structure. The dots in Fig. 7 represent measured values, and the dashed line represents simulated (calculated values). The horizontal x axis in Fig. 7 plots the uniformity metric $X_U$ (with 0.5 indicating perfect uniformity), and the vertical y axis in Fig. 7 plots the corresponding probability mass $p(X_U)$.

Specifically, to obtain the simulated values, the distribution of the response uniformity of the 193 ring oscillator PUF 40 instances was simulated by generating 1.000.000 samples from the set of probability mass functions $$p\left(X_U = \frac{k}{N}\right)$$. Each ring oscillator PUF 40 instance is comprised of 512 ring oscillators 411 ... 46n arranged in a $32 \times 16$ array. For each ring oscillator PUF 40 hardware implementation, 100 oscillation frequency measurements are taken under standard operating conditions. The 1.000.000 simulated realizations of the uniformity distribution are shown as a dashed line, and the empirically observed probability mass function values are shown as dots in Fig. 7. Despite the large number of samples, the simulated graph accurately reflects the shape of the empirical distribution, indicating that the empirical distribution is contained within the area covered by the simulated graph.

Thus, it has been shown that a PUF structure 4 that comprises an N-bit ring oscillator PUF 40 according to the third exemplary embodiment or its preferred further developments can be used to obtain a noise vector 7 drawn from a centered binominal distribution that can be used directly in a lattice-based cryptographic method based on the LWE problem, such as for example Kyber [4].

It is noted that the description has assumed that $N$ bits are obtained from the ring oscillator PUF 40. In case where the noise vector 7 is not a $N$-dimensional bit vector, but is a sequence or array of n scalar values drawn from $\mathbb{Z}_{q'}$ with $1 \leq q' \leq q$, a respective plurality of bits obtained from the ring oscillator can be grouped together to obtain a respective multi-bit entry of the $n$-dimensional noise vector 7. The same applies also to other hardware-based structures 4, such as the arbiter PUF 50 (Fig. 8) based structure described hereinbelow.

Fig. 8 shows a schematic diagram of an arbiter PUF 50. A fourth exemplary embodiment will now be described. The fourth exemplary embodiment is based on the first or second exemplary embodiment or one of their further developments, and differs therefrom in that the hardware-implemented structure 4 (Fig. 3) is a PUF structure 4 (Fig. 3) and comprises at least one arbiter PUF 50. Reference will now be made to Fig. 8 and Fig. 3.

The arbiter PUF 50 of the fourth exemplary embodiment comprises n consecutive stages each comprising a respective switch delay element 511, 512, ... 51n. A trigger signal 52 is supplied to the input side of the arbiter PUF 50 and propagates along an upper path 53 and a lower path 54. Each switch delay element 511, 512 ... 51n can either connect its upper input to its upper output and its lower input to its lower output, thus leaving the upper and lower paths 53 and 54 unchanged, or can connect its upper input to its lower output and its lower input to its upper output, thus letting the two propagating signals switch from upper path 53 to lower path 54 and vice versa. Internally, each switch delay element 511 ... 51n may be configured by four crosslinked two-to-one multiplexers, for example. The challenge 6 in the fourth exemplary embodiment is a challenge vector comprising a number of bits that equals the number of switch delay units 511 ... 51n. Each bit of the challenge vector 6 is used to turn on or off a control signal supplied to a respective one of the switch delay elements 511 ... 51n, causing it to either switch or not switch the paths 53, 54. In this way, the arbiter PUF 50 comprising $N$ switch delay units offers $2^N$ different configurations for the propagating paths 53, 54 on which the trigger signal can reach the final stage of the arbiter PUF 50, i.e., the arbiter 55. Due to the effect of random process variations during fabrication, the propagation times along each of the 2N different possible path configurations vary to a certain degree. The arbiter 55 is configured to output bit value "1" if the signal arrives at its upper input before the signal arrives at its lower input, and output bit value "0" if the signal arrives at its upper input after the signal arrives at its lower input. As such, in response to being supplied with a randomly generated challenge vector 6, the arbiter PUF 50 outputs a unique and random response bit.

In an ideal case, the arbiter PUF 50 output should be uniform, i.e., the probability of generating 0 or 1 as output should be 50 %, so that an attacker cannot predict the response. However, as described in [10], arbiter PUFs 50 are not uniformly distributed in real-world large-scale FPGA platforms due to implementation limitations. While this non-uniformity is an undesired quality in traditional key generation applications, the fourth exemplary embodiment proposed to leverage this non-uniformity to provide a noise vector 7 following a proper narrow normal-type distribution for LWE-based PQ-secure cryptographic methods.

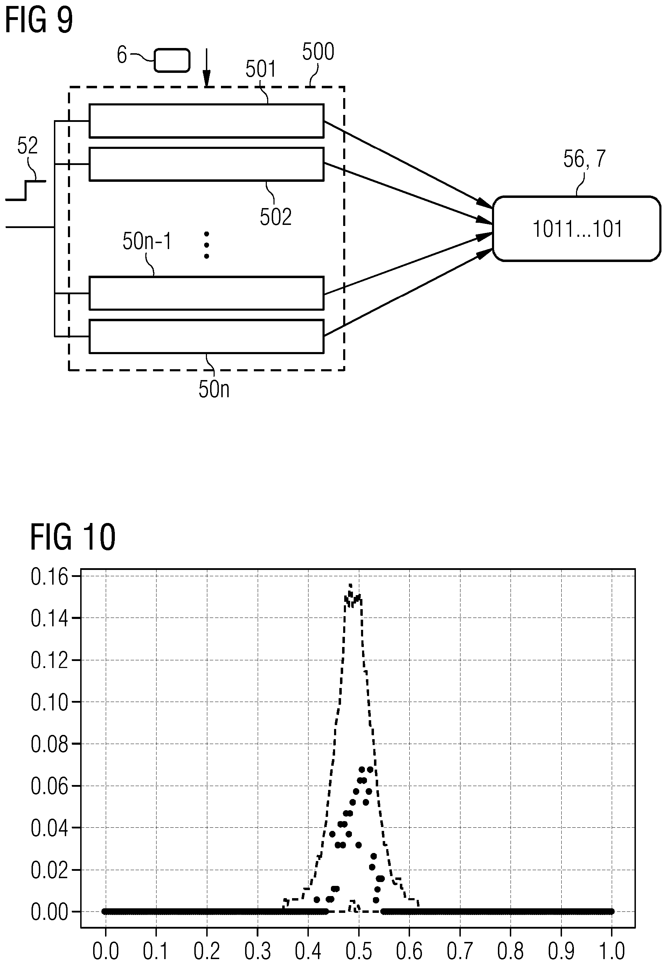

Fig. 9 shows a schematic diagram of an N-bit arbiter PUF structure 500 that can provide a suitable noise vector 7 comprising a plurality of $N$ bits drawn from the desired distribution (wherein the $N$ bits that can optionally be grouped into $n$ scalar values to form the noise vector 7). Reference is made to Figs. 9, 8 and 3.

The N-bit arbiter PUF structure 500 comprises a plurality of $N$ arbiter PUFs 501, 502, ...., 50n-1, 50n, each of which having the structure and configuration that was described for the arbiter PUF 50 of Fig. 8. The trigger signal 52 is supplied to each of the $N$ arbiter PUFs 501 ... 50n, and the same challenge vector 6 is supplied to each of the $N$ arbiter PUFs 501 ... 50n. Due to the effect of random process variations during fabrication, different $N$ arbiter PUFs 501 .. 50n, may output different values in response to the same challenge 6. As such, the combined output 56 of the different arbiter PUFs 501 ... 50n comprises *N* independent random bits.

In the real-world hardware-implementation mentioned above, the combined output 56 is not perfectly uniform; rather, its uniformity follows a narrow normal-type distribution. As has been discussed before and as is also mentioned in [7], PQ-safe algorithms require a noise term that is sampled from a narrow Gaussian distribution. The combined output 56 of the *N* bit arbiter PUF structure 500 can meet this condition, as will be shown now.

Fig. 10 shows visualized and measured probability mass functions for a 256-bit ring oscillator PUF structure 500 comprising 256 arbiter PUFs 501..50n and using a 32-bit challenge vector 6, i.e, each arbiter PUF 501 ... 50n has 32 switch delay elements 511 .. 51n, according to a preferred further development of the fourth exemplary embodiment.

In the same way is in Fig. 7, the dots in Fig. 10 represent measured values, and the dashed line represents simulated (calculated values). The horizontal x axis in Fig. 7 plots the uniformity metric $X_U$ (with 0.5 indicating perfect uniformity), and the vertical y axis in Fig. 7 plots the corresponding probability mass $p(X_U)$.

That is, the uniformity over the one million challenge response data set (CRPs) can be assessed by simulating realizations of the uniformity distribution and the empirically observed mass function for the arbiter PUF structure 500 of Fig. 9 in the same manner as has been described in connection with the ring oscillator PUF 40 of Fig. 6 and in connection with Fig. 7. As can be seen in Fig. 10, despite the large number of samples, the simulated graph shown as a dashed line accurately reflects the shape of the empirical distribution shown as dots, thus indicating that the empirical distribution is contained within the area covered by the simulated graph.

Thus, it has been shown that a PUF structure 4 that comprises the N-bit arbiter PUF structure 500 according to the fourth exemplary embodiment or its preferred further development can be used to obtain a noise vector 7 drawn from a centered binominal distribution that can be used directly in a lattice-based cryptographic method based on the LWE problem, such as for example Kyber [4].

Although the present invention has been described in accordance with preferred embodiments, it is obvious for the person skilled in the art that modifications are possible in all embodiments.

The computer program product need not be stored in a mass storage 2 and loaded into RAM 9. The computer program product can also be downloaded from a server via network to RAM 9. The computer program product may also be stored on a non-shown EEPROM and may be executed by CPU 1 directly from the EEPROM. It is also conceivable that no computer program product is used and that the units 11, 12, 13 of the keypair generation device 10 are embodied in hardware, such as in the form of FPGA chips or the like.

Fig. 2 shows the hardware-implemented structure 4 being a device that is separate from other devices of computing device 10. However, the hardware-implemented structure 4 may preferably also be an integrated component. For example, the hardware-implemented structure 4 may be integrated as one or more specific circuits into CPU 1 of the computing device 10.

LWE is merely one example of lattice-based cryptographic problems and the proposed solution of obtaining a noise vector 7 drawn from a narrow non-uniform distribution directly from a hardware-implemented structure 4 can also be applied to other lattice-based cryptographic problems and other problems and applications in post-quantum cryptography.

The ring oscillator PUF 40 in Fig. 6 has been shown and described as comprising two distinct subsets 41, 46 of ring oscillators 411-41n, 461-46n. However, it is also conceivable to have only one large set of ring oscillators 411...46n, and each of the MUXes 44, 47 may be connected such that based on the challenge, any of the ring oscillators 411...46n can be selected by any of the MUXes 44, 47.

Two PUF structures 4, namely a PUF structure 4 based on the ring oscillator PUF 40 and a PUF structure 4, 500 based on the arbiter PUF 50 have been described. However, there is no restriction to these, and the skilled person will be able to measure uniformity distributions of other known or newly developed PUF structures and other types of hardware-implemented structures that can generate noise and determine their suitability for use in obtaining noise vectors 7 for use in PQ-secure cryptographic algorithms without departing from the gist of the claimed invention.

Advantages of the disclosure of the exemplary embodiments and their preferred further developments are now summarized in brief:

According to the exemplary embodiments, a binominal noise vector 7 is generated in hardware. By omitting software-base steps such as Gaussian sampling, the noise vector 7 generation is robust against both timing and software-based attacks. This presents the opportunity for efficient integration of PQ-secure cryptographic methods into hardware implementations on platforms such as FPGAs or ASICs. The physical characteristics of the hardware-implemented structures 4 disclosed, such as the structures based on ring-oscillator PUF 40 or arbiter PUF 50, can provide a sufficient source of entropy and uniqueness of the output noise vectors 7, making them a viable option for generating random outputs drawn from a centered binominal distribution.

Furthermore, in comparison to existing hardware-based approaches from literatures [5], [7], [8], the disclosed PUF-based hardware-implemented structures 4 are advantageously more area-efficient in hardware implementation and require less complex architectural designs in terms of the number of slices and flipflops utilized in FPGA implementation. Yet still, the output entropy of the noise vectors 7 output by these hardware-implemented structures 4 can provide a sufficient or even a high level of PQ-security.

For instance, with the 32-bit APUFs 501 ... 50n of the preferred development of the fourth exemplary embodiment, each of the 256 APUs 501 ... 50n utilizes 8 slices, such that a total of 1024 slices are required for the entire 256-bit output to obtain a 256-bit noise vector 7. Unlike existing solutions, such an implementation can be based on a pure Look Up Tables (LUT) implementation without the use of any BRAM or other costly parts of FPGA implementation that could potentially lead to high latency and overhead.

As such, the exemplary embodiments and their preferred further developments advantageously offer a low-overhead, lightweight and hardened way of obtaining noise vectors 7 for use in cryptographic methods, in particular in lattice-based cryptographic methods, and more particularly for the calculation of a public key of a PQ-secure cryptographic keypair.

Literature

[1] Regev, O. "On lattices, learning with errors, random linear codes, and cryptography", J. ACM. 56. 10.1145/1060590.1060603 (2009).

[2] Regev, O. "The Learning with Errors Problem (Invited Survey)", 2010 IEEE 25th Annual Conference on Computational Complexity, Cambridge, MA, USA, 2010, pp. 191-204, doi: 10.1109/CCC.2010.26

[3] Lyubashevsky, V., Peikert, C., Regev, O. (2010). On Ideal Lattices and Learning with Errors over Rings. In: Gilbert, H. (eds) Advances in Cryptology - EUROCRYPT 2010. EUROCRYPT 2010. Lecture Notes in Computer Science, vol 6110. Springer, Berlin, Heidelberg. https://doi.org/10.1007/978-3-642-13190-5_1

[4] Bos, J. et al. "CRYSTALS-Kyber: a CCA-secure module-lattice-based KEM", 2018 IEEE European Symposium on Security and Privacy (EuroS&P). IEEE, 2018

[5] Alkim, E., Jakubeit P., Schwabe, P. "NewHope on ARM Cortex-M", SPACE Conference 2016

[6] D'Anvers, Jan-Pieter. "Design and security analysis of lattice-based post-quantum encryption" (2021)

[7] Pöppelmann, T and Güneysu, T, "Towards practical lattice-based public-key encryption on reconfigurable hardware". In SAC conference 2013

[8] Clercq, R., Roy, S., Vercauteren, F., and Verbauwhede, I., "Efficient software implementation of ring-LWE encryption". In DATE Conference & Exhibition, 2015.

[9] Maiti, A., Casarona, J., McHale, L., Schaumont, P., "A large scale characterization of RO-PUF", HOST conference, 2010

[10] Aghaie, A., Moradi, A., "Inconsistency in simulation and practice in delay-based strong PUFs", TCHES 2021

[11] Willsch, B., "Integration of phycially unclonable functions (PUFs) in CMOS", doctoral dissertation, 2019.

**Claims**

1.  A computer-implemented method for obtaining a cryptographic key pair (8, 9) for use in a cryptographic method, the method comprising:

    a) randomly generating (S1) a private key (5, 8) of the cryptographic key pair (8, 9);
    b) operating (S2) a hardware-implemented structure (4) using a randomly generated challenge (6) to obtain, in particular directly, a noise vector (7) from the hardware-implemented structure (4); and
    c) calculating (S3) a public key (9) of the cryptographic key pair (8, 9) from the generated random private key (5, 8) using the noise vector (7) obtained from the hardware-implemented structure (4).

2.  The method according to claim 1,
    further comprising performing storing and/or transmitting of cryptographically encrypted data (17) and/or of cryptographically signed data (19), wherein encrypting data (16) to obtain the cryptographically encrypted data (17) and/or verifying the cryptographically signed data (19) is performed according to the lattice-based cryptographic method and using the public key (9, 99) of the cryptographic key pair (8, 9).

3. The method according to claim 1 or 2,
wherein a uniformity metric of a plurality of noise vectors (7) obtained from the hardware-implemented structure (4) including the noise vector (7) obtained in the step b) follows a non-uniform distribution.

4. The method of claim 3,
wherein the non-uniform distribution is one of a Gaussian distribution, a centered binominal distribution, and a $\chi$ distribution.

5. The method according to one of claims 1 to 4,
wherein the cryptographic method is a lattice-based cryptographic method.

6. The method according to claim 5,
wherein the lattice-based cryptographic method is a method based on or derived from a Learning With Error, LWE, problem.

7. The method according to claim 6,

wherein the randomly generated private key (5, 8) comprises a private key vector (5); and
wherein the public key (9) is calculated by:

- randomly generating a matrix ($A$) comprising a number of independent rows;
- multiplying the generated matrix ($A$) with the private key vector (5); and
- adding the noise vector (7) obtained from the hardware-implemented structure (4) to the result of said multiplying to obtain a further vector (**b**); and
- forming the public key (9) comprising the matrix ($A$) and the further vector (**b**).

8. The method according to one of claims 1 to 7,
wherein entries of the respective randomly generated entity (5, 6, $A$) follow a uniform distribution.

9. The method according to one of claims 1 to 8,

wherein the step of randomly generating the entries of the respective randomly generated entity (5, 6, A) comprises seeding a random number generator and obtaining the entries from the seeded random number generator,
wherein, in particular, entropy for seeding the random number generator is obtained from a physical process and/or the random number generator generates random numbers from a physical process.

10. The method according to one of claims 1 to 9,
wherein the hardware-implemented structure (4) comprises a physical unclonable function, PUF, structure (4).

11. The method according to claim 10,
wherein the PUF structure (4) comprises a ring oscillator PUF (50) or an arbiter PUF (50).

12. The method according to claim 11,
wherein the PUF structure (4) comprises a ring oscillator PUF comprising a plurality $2N$ of ring oscillators, the ring oscillator PUF (40) being configured to output the noise vector (7) comprising a plurality $N$ of bits when operated according to an exclusive pairwise quantization scheme.

13. The method according to claim 11,
wherein the PUF structure comprises a plurality of arbiter PUFs (501-50n), and a same challenge vector (6) is used as the challenge (6) with each of the arbiter PUFs (501-50n) to obtain a respective element of the noise vector (7, 56).

14. The method according to one of claims 1 to 12,
wherein the hardware-implemented structure (4) is implemented as an array on an FPGA or on an ASIC.

15. A computer program product comprising a program code for executing the method of one of claims 1 to 14 when run on at least one computing device (10) that comprises or is communicatively connected with the hardware-implemented structure (4).

16. A computing device (10) for obtaining a cryptographic key pair (8, 9) for use in a cryptographic method, the computing device (10) comprising:

    - a hardware-implemented structure (4); and

        a) a first unit (11) configured to randomly generate a private key (5, 8) of the cryptographic key pair (8, 9);
        b) a second unit (12) configured to operate the hardware-implemented structure (4) using a randomly generated challenge (6) to obtain, in particular directly, a noise vector (7) from the hardware-implemented structure (4); and
        c) a third unit (13) configured to calculate a public key (9) of the cryptographic key pair (8,9) from the generated random private key (5, 8) using the noise vector (7) obtained from the hardware-implemented structure (4).

FIG 1

$$b = A \quad s + e \qquad \sqrt{n} \leq |\mathbf{e}| << q$$

FIG 2

10

1
2
4
3

FIG 3

10

6
12
4
7
13
8  9
5
11

## FIG 4

S1

S2

S3

## FIG 5

100

10

12

13

11

8    9

18

14

19

30

17

20

99

16

15

FIG 6

EP 4 629 559 A1

## FIG 7

## FIG 8

FIG 9

FIG 10

Europäisches
Patentamt
European
Patent Office
Office européen
des brevets

# EUROPEAN SEARCH REPORT

**Application Number**

EP 24 16 8637

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CAMBOU BERTRAND ET AL: "Post Quantum Cryptographic Keys Generated with Physical Unclonable Functions", APPLIED SCIENCES, vol. 11, no. 6, 21 March 2021 (2021-03-21), page 2801, XP093073617, DOI: 10.3390/app11062801 * Section 4; figures 6, 7 * | 1-16 | INV. H04L9/30 |
| X | US 2013/051552 A1 (HANDSCHUH HELENA [US] ET AL) 28 February 2013 (2013-02-28) | 15 | |
| A | * paragraph [0015] - paragraph [0038] * * paragraph [0117] - paragraph [0119] * | 1-14,16 | |

**TECHNICAL FIELDS SEARCHED (IPC)**

H04L
G06F

The present search report has been drawn up for all claims

| Place of search | Date of completion of the search | Examiner |
|---|---|---|
| Munich | 23 September 2024 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 629 559 A1

## ANNEX TO THE EUROPEAN SEARCH REPORT
## ON EUROPEAN PATENT APPLICATION NO.

EP 24 16 8637

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2024

| Patent document cited in search report | Publication date | Patent family member(s) | Publication date |
|---|---|---|---|
| US 2013051552 A1 | 28-02-2013 | EP 2526505 A1 | 28-11-2012 |
| | | KR 20120127607 A | 22-11-2012 |
| | | US 2013051552 A1 | 28-02-2013 |
| | | WO 2011089143 A1 | 28-07-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **REGEV, O.** On lattices, learning with errors, random linear codes, and cryptography. *J. ACM.*, 2009, vol. 56
- **REGEV, O.** The Learning with Errors Problem (Invited Survey). *2010 IEEE 25th Annual Conference on Computational Complexity, Cambridge, MA, USA*, 2010, 191-204
- On Ideal Lattices and Learning with Errors over Rings. **LYUBASHEVSKY, V.** ; **PEIKERT, C.** ; **REGEV, O.** Advances in Cryptology - EUROCRYPT 2010. EUROCRYPT 2010. Lecture Notes in Computer Science. Springer, 2010, vol. 6110
- CRYSTALS-Kyber: a CCA-secure module-lattice-based KEM. **BOS, J. et al.** 2018 IEEE European Symposium on Security and Privacy (EuroS&P). IEEE, 2018
- **ALKIM, E.** ; **JAKUBEIT P.** ; **SCHWABE, P.** NewHope on ARM Cortex-M. *SPACE Conference*, 2016

- **D'ANVERS, JAN-PIETER**. *Design and security analysis of lattice-based post-quantum encryption*, 2021
- **PÖPPELMANN, T** ; **GÜNEYSU, T**. Towards practical lattice-based public-key encryption on reconfigurable hardware. *SAC conference*, 2013
- **CLERCQ, R.** ; **ROY, S.** ; **VERCAUTEREN, F** ; **VERBAUWHEDE, I**. Efficient software implementation of ring-LWE encryption. *DATE Conference & Exhibition*, 2015
- **MAITI, A.** ; **CASARONA, J.** ; **MCHALE, L.** ; **SCHAUMONT, P**. A large scale characterization of RO-PUF. *HOST conference*, 2010
- **AGHAIE, A** ; **MORADI, A.** Inconsistency in simulation and practice in delay-based strong PUFs. *TCHES*, 2021
- **WILLSCH, B.** Integration of phycially unclonable functions (PUFs) in CMOS. *doctoral dissertation*, 2019